(19) Europäisches Patentamt
European Patent Office
Office européen des brevets

(11) Veröffentlichungsnummer: **0 005 500**
**B1**

(12) # EUROPÄISCHE PATENTSCHRIFT

(45) Veröffentlichungstag der Patentschrift: **07.10.81**

(51) Int. Cl.³: **C 07 F 9/24,** C 07 F 9/65, C 08 K 5/51

(21) Anmeldenummer: **79101395.6**

(22) Anmeldetag: **08.05.79**

(54) **Dioxaphosphepine, ihre Herstellung und Verwendung als Stabilisatoren für organisches Material.**

(30) Priorität: **18.05.78 CH 5390/78**

(43) Veröffentlichungstag der Anmeldung: **28.11.79 Patentblatt 79/24**

(45) Bekanntmachung des Hinweises auf die Patenterteilung: **07.10.81 Patentblatt 81/40**

(84) Benannte Vertragsstaaten: **BE CH DE FR GB IT NL**

(73) Patentinhaber: **CIBA-GEIGY AG, Patentabteilung Postfach, CH-4002 Basel (CH)**

(72) Erfinder: **Rasberger, Michael, Dr., Waltersgrabenweg 6, CH-4125 Riehen (CH)**

(56) Entgegenhaltungen:
**SU-A-179 918**
**CHEMICAL ABSTRACTS, Vol. 68, Zusammenfassung Nr. 12597s, 1968, Columbus, Ohio, USA, L.V. VERIZHNIKOV et al.: Synthesis of esters of O,O'-biphenylylene phosphorous acid", Seite 1190,**

**CHEMICAL ABSTRACTS, Vol. 73, Zusammenfassung Nr. 15657a, 1970, Columbus, Ohio, USA, P.A. KIRPICHNIKOV et al.: «Phosphorous acid esters as colorless stabilizers of low-pressure polyethylene», Seite 30**

(56) Entgegenhaltungen:
**CHEMICAL ABSTRACTS, Vol. 75, Zusammenfassung Nr. 130242q, 1971, Columbus, Ohio, USA, L.V. VERIZHNIKOV et al.: «O,O'-Biphenylylenephosphorous acid esters as stabilizers for poly (vinyl chloride)», Seite 6**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 005 500 B1

ACTORUM AG.

# Dioxaphosphepine, ihre Herstellung und Verwendung als Stabilisatoren für organisches Material

Die vorliegende Erfindung betrifft neue N-substituierte 6-Amino-dibenz[d, f] [1,3, 2]dioxaphosphepine, deren Herstellung, deren Verwendung als Stabilisatoren für organisches Material, sowie das mit deren Hilfe stabilisierte organische Material.

Phosphonite sind als Stabilisatoren bekannt. Im russischen Patent Nr. 179 918 sind 2-(N-Alkylanilido)-4,5-benz-1,3,2-dioxaphospholine beschrieben, die sich von den erfindungsgemässen Verbindungen in Art und Struktur stark unterscheiden. Die erfindungsgemässen Verbindungen zeichnen sich insbesondere hinsichtlich Lagerstabilität, Wasseraufnahme, Hydrolyseempfindlichkeit, Verarbeitungsstabilisierung, Farbverhalten, Flüchtigkeit, Migrationsverhalten, Verträglichkeit und Lichtschutzverbesserung aus.

Die vorliegende Erfindung betrifft N-substituierte 6-Amino-dibenz[d, f] [1, 3, 2] dioxaphosphepine der Formel (I)

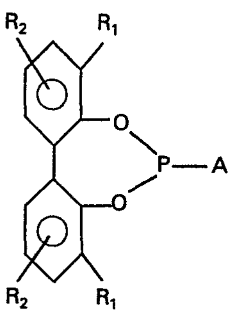

(I),

worin
$R_1$ $C_1$–$C_{18}$ Alkyl und
$R_2$ Wasserstoff oder $C_1$–$C_{18}$ Alkyl bedeutet, und
A eine durch aliphatische, alicyclische, aromatische oder araliphatische Reste substituierte Aminogruppe, eine heterocyclische Aminogruppe oder ein Hydrazinderivat bedeutet.

$R_1$ und $R_2$ sind als $C_1$–$C_{18}$ Alkyl insbesondere geradkettiges oder verzweigtes Alkyl mit 1–8 C-Atomen, z.B. Methyl, Äthyl, n-Propyl, iso-Propyl, sec.-Butyl, t.-Butyl, t.Pentyl, n-Octyl, 2-Äthylhexyl oder 1,1,3,3-Tetramethylbutyl. $R_1$ ist bevorzugt α-verzweigt. In besonders bevorzugten Verbindungen haben $R_1$ und $R_2$ die gleiche Bedeutung.

Die Reste $R_2$ befinden sich bevorzugt in 1- bzw. in 11-Stellung, und insbesondere in 2- bzw. 10-Stellung. Bevorzugt werden Verbindungen, in welchen alle im Molekül vorkommenden primären oder sekundären Aminstickstoffe mit einer Gruppe der Formel II substituiert sind:

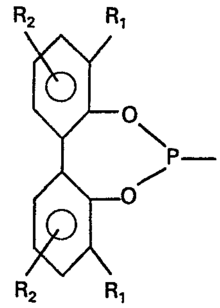

(II).

In der Formel II besitzen die Symbole $R_1$ und $R_2$ die oben angegebene Bedeutung.

Bevorzugt werden Amine A der Formel III

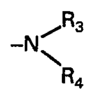

(III),

worin
$R_3$ Wasserstoff, $C_1$–$C_{22}$ Alkyl, $C_2$–$C_{21}$ Oxa- oder Thiaalkyl, $C_3$–$C_{18}$ Alkenyl, $C_3$–$C_{18}$ Alkinyl, $C_2$–$C_6$ Hydroxyalkyl, $C_3$–$C_{24}$ Alkoxycarbonylalkyl, $C_5$–$C_{12}$ Cycloalkyl, $C_6$–$C_{14}$ Aryl, $C_7$–$C_{15}$ Alkaryl, $C_7$–$C_{15}$ Aralkyl, eine unsubstituierte oder substituierte $C_5$–$C_{17}$ Piperidin-4-ylgruppe oder eine Gruppe der Formel II bedeutet, worin $R_1$ und $R_2$ die oben angegebene Bedeutung haben, und
$R_4$ $C_1$–$C_{22}$ Alkyl, $C_2$–$C_{21}$ Oxa- oder Thiaalkyl, $C_3$–$C_{18}$ Alkenyl, $C_3$–$C_{18}$ Alkinyl, $C_2$–$C_6$ Hydroxyalkyl, $C_3$–$C_{24}$ Alkoxycarbonylalkyl, $C_5$–$C_{12}$ Cycloalkyl, $C_6$–$C_{14}$ Aryl, $C_7$–$C_{15}$ Alkaryl, $C_7$–$C_{15}$ Aralkyl, eine unsubstituierte oder substituierte $C_5$–$C_{17}$ Piperidin-4-ylgruppe, eine Gruppe der Formel IV

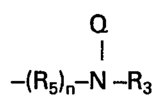

(IV) oder

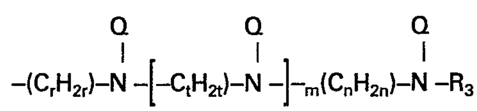

(V),

worin
$R_3$ die oben angegebene Bedeutung hat, und
n 0 oder 1 ist, und
$R_5$ gegebenenfalls mit einem oder zwei Sauerstoff- oder Schwefelatomen unterbrochenes $C_2$–$C_{22}$ Alkylen, $C_4$–$C_{22}$ Alkenylen, $C_4$–$C_{22}$ Alkinylen, $C_5$–$C_9$ Cycloalkylen, oder eine Gruppe der Formel IV

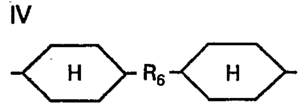

ist, worin $R_6$ –O–, –S– oder –$(R_7)C(R_8)$– ist, wobei $R_7$ und $R_8$ unabhängig voneinander Wasserstoff oder $C_1$–$C_8$ Alkyl sind oder $R_7$ und $R_8$ zusammen mit dem C-Atom, an das sie gebunden sind, $C_5$–$C_{12}$ Cycloalkyl ergeben, oder $R_7$ und $R_8$ bedeuten zusammen 1,4-Cyclohexylendimethylen oder 1,3,3-Trimethyl-cyclohexylen-1,5 und worin $R_5$ ferner Phenylen, Biphenylen oder eine Gruppe der Formel

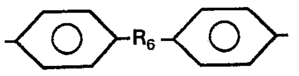 bedeutet,

wobei $R_6$ die oben angegebene Bedeutung hat, und r,t, und n unabhängig voneinander 2, 3, 4, 5 oder 6 sind, und
m 0,1,2 oder 3 ist, und
Q eine Gruppe der Formel II bedeutet, worin $R_1$ und $R_2$ die oben angegebene Bedeutung haben, oder
$R_3$ und $R_4$ ferner zusammen mit dem N-Atom, an das sie gebunden sind, substituiertes Pyrrolidin, Oxazolidin, Piperidin oder Morpholin bedeuten, oder $R_3$ und $R_4$ zusammen den Rest $-CH_2-CH_2-N(Q)-CH_2-CH_2-$ bilden, worin Q die oben angegebene Bedeutung hat.

Bedeuten $R_3$ und $R_4$ $C_1-C_{22}$ Alkyl, so kann es sich um Methyl, Äthyl, n-Propyl, Isopropyl, n-Butyl, sec.Butyl, tert.Butyl, n-Pentyl, n-Hexyl, Isohexyl, n-Octyl, 1,1,3,3-Tetramethylbutyl, n-Nonyl, Decyl, Dodecyl, Tetradecyl, Hexadecyl, Octadecyl, Eicosyl oder Docosyl handeln. Bevorzugt besitzen $R_3$ und $R_4$ als Alkylgruppen 1–18 C-Atomen, und $R_3$ insbesondere 1–12 C-Atome und $R_4$ insbesondere 1–4 C-Atome. $R_3$ und $R_4$ sind als $C_2-C_{21}$, insbesondere $C_4-C_{21}$ Oxa-oder Thiaalkyl bevorzugt Alkoxy- oder Alkylthiopropyl, wie Butoxypropyl, Dodecylthiopropyl, Octyloxypropyl oder Octadecyloxypropyl.

$R_3$ und $R_4$ sind als $C_3-C_{18}$ Alkenyl beispielsweise Allyl, Methallyl, n-Hex-3-enyl, n-Oct-4-enyl oder n-Undec-10-enyl. Bevorzugt sind Allyl und Methallyl, und insbesondere Allyl.

$R_3$ und $R_4$ sind als $C_3-C_{18}$ Alkinyl z.B. Propargyl, n-But-1-inyl, n-But-2-inyl oder n-Hex-1-inyl. Bevorzugt sind Alkinylgruppen mit 3 oder 4 C-Atomen und insbesondere Propargyl.

Bedeuten $R_3$ und $R_4$ Hydroxyalkyl mit 1–6 C-Atomen, so kann es sich dabei um 2-Hydroxypropyl, 2-Hydroxyäthyl, 3-Hydroxypropyl, 4-Hydroxybutyl oder 6-Hydroxyhexyl handeln.

Sind $R_3$ und $R_4$ $C_3-C_{24}$ Alkoxycarbonylalkyl bevorzugt $C_3-C_{24}$ Alkoxycarbonylmethyl oder -äthyl und insbesondere $C_3-C_{14}$ Alkoxycarbonylmethyl oder $C_3-C_{15}$ Alkoxycarbonyläthyl, so kann es sich dabei beispielsweise um Methoxycarbonylmethyl, Äthoxymethyl, Methoxycarbonyläthyl, Octoxycarbonylmethyl, Octoxycarbonylbutyl, Dodecyloxycarbonyläthyl oder Octadecyloxycarbonyläthyl handeln.

$R_3$ und $R_4$ sind als $C_5-C_{12}$, bevorzugt $C_5-C_8$ und insbesondere $C_6$ Cycloalkyl beispielsweise Cyclopentyl, Cyclohexyl, Cycloheptyl, Cyclooctyl, Cyclononyl oder Cyclododecyl.

$R_3$ und $R_4$ sind als $C_6-C_{14}$ Aryl z.B. Phenyl, α-Naphthyl, β-Naphthyl oder Phenanthryl. Bevorzugt werden Phenylgruppen.

Bedeuten $R_3$ und $R_4$ Aralkyl mit $C_7-C_{15}$ C-Atomen, so handelt es sich z.B. um Benzyl, α-Phenyläthyl, α,α-Dimethylbenzyl oder um 2-Phenyläthyl, bevorzugt um Benzyl.

$R_3$ und $R_4$ können als $C_7-C_{15}$ Alkarylgruppen beispielsweise Tolyl, 2,6-Dimethylphenyl, 2,6-Diäthylphenyl, 2,4,6-Triisopropylphenyl oder 4-t.Butylphenyl sein.

Sind $R_3$ und $R_4$ $C_5-C_{17}$ Piperidin-4-yl-gruppen, so kann es sich dabei beispielsweise um das unsubstituierte Piperidin-4-yl handeln, oder das Piperidin kann mit bis zu 5 Alkylgruppen, bevorzugt mit Methyl- oder Äthyl-gruppen substituiert sein. Bevorzugte Substitutionsstellen sind die 2- und 6-Positionen im Piperidinring. Es kann sich ferner auch um 3,3,5-Trimethyl-8-äthoxy-bicyclo[4,4,0]dec-2-yl handeln.

$R_3$ und $R_4$ können daher Piperidin-4-yl-gruppen folgender Konstitution bilden:

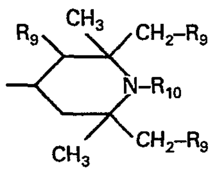 (XI)

worin $R_9$ Wasserstoff oder Methyl bedeutet, und $R_{10}$ Wasserstoff, Oxyl, $C_1-C_{18}$ Alkyl, $C_3-C_8$ Alkenyl, $C_3-C_6$ Alkinyl, $C_7-C_{12}$ Aralkyl, $C_2-C_{21}$ Alkoxyalkyl, eine aliphatische Acylgruppe mit 1–4 C-Atomen oder eine Gruppe $-CH_2COOR_{11}$, wobei $R_{11}$ $C_1-C_{12}$ Alkyl, $C_3-C_8$ Alkenyl, Phenyl, $C_7-C_8$ Aralkyl oder Cyclohexyl bedeutet.

Ganz besonders bevorzugte Piperidin-4-yl-reste sind solche, worin $R_9$ Wasserstoff und $R_{10}$ Wasserstoff, Methyl oder Acetyl bedeutet.

Die bevorzugte Bedeutung von $R_9$ ist Wasserstoff.

$R_{10}$ ist als $C_1-C_{18}$ Alkyl z.B. Methyl, Äthyl, n-Propyl, n-Butyl, n-Pentyl, n-Octyl, n-Decyl, n-Dodecyl oder Octadecyl. Bevorzugt sind Alkylgruppen mit 1 bis 12, ferner solche mit 1 bis 8, insbesondere solche mit 1 bis 4 Kohlenstoffatomen und vor allem Methyl.

$R_{10}$ ist als $C_3-C_8$ Alkenyl beispielsweise Allyl, 3-Methyl-2-butenyl, 2-Butenyl, 2-Hexenyl oder 2-Octenyl, insbesondere Allyl.

$R_{10}$ ist als $C_3-C_6$ Alkinyl z.B. Propargyl.

$R_{10}$ ist als $C_7-C_{12}$ Aralkyl z.B. Benzyl, β-Phenyläthyl oder 4-tert. Butyl-benzyl, bevorzugt Benzyl.

Bedeutet $R_{10}$ $C_2-C_{21}$ Alkoxyalkyl, so kann der Alkylteil 1 bis 3 Kohlenstoffatome enthalten und der Alkoxyteil aus 1 bis 18 Kohlenstoffatomen bestehen, wie z.B. in Methoxymethyl, Äthoxymethyl, 2-Methoxyäthyl, 2-Äthoxyäthyl, 2-n-Butoxyäthyl, 3-n-Butoxypropyl, 2-Octoxyäthyl oder 2-Octadecyloxyäthyl; insbesondere zu erwähnen sind Verbindungen, in den $R_{10}$ eine Alkoxyalkylgruppe mit 2 bis 6 Kohlenstoffatomen bedeutet.

$R_{10}$ ist als aliphatische Acylgruppe mit 1 bis 4 Kohlenstoffatomen, beispielsweise Formyl, Acetyl, Acryloyl oder Crotonoyl, insbesondere Acetyl.

Ist $R_{10}$ die Gruppe $-CH_2COOR_{11}$ so bedeutet $R_{11}$ als $C_1-C_{12}$ Alkyl, z.B. Methyl, Äthyl, Isopropyl, n-Butyl, Isobutyl, t-Butyl, Isopentyl, n-Octyl oder n-Dodecyl. Bevorzugt ist $R_{11}$ $C_1-C_4$ Alkyl. $R_{11}$ ist als $C_3-C_8$ Alkenyl z.B. Allyl, 2-Butenyl oder 2-Hexenyl. $R_{11}$ ist als $C_7-C_8$ Aralkyl z.B. Benzyl oder α-Phenyläthyl.

Bedeutet $R_3$ eine Gruppe der Formel II, so besitzt diese Gruppe bevorzugt die gleiche Substitution wie der bereits im Molekül vorhandene Dibenz[d,f] [1,3,2]dioxaphosphepin-6-yl-Rest.

Bilden $R_3$ und $R_4$ mit dem N-Atom an das sie gebunden sind einen Pyrrolidin-, Oxazolidin-, Piperidin- oder Morpholinring, so können diese Heterocyclen mit bis zu fünf Methyl- oder Äthylgruppen substituiert sein. Bevorzugt sind diese Ringsysteme unsubstituiert.

n kann 0 oder bevorzugt 1 sein.

$R_5$ kann als $C_2$–$C_{22}$ Alkylen, bevorzugt $C_2$–$C_9$ und insbesondere $C_2$–$C_6$ Alkylen beispielsweise Dimethylen, Trimethylen, Tetramethylen, Hexamethylen, Octamethylen, Nonamethylen, 2,2,4-Trimethylhexamethylen, Decamethylen, Dodecamethylen, Octadecamethyl oder Docosamethylen sein. Sind die Alkylengruppen gegebenenfalls mit –O– oder –S– unterbrochen, so kann es sich dabei um 2-Thiapropylen-1,3,3- Thia-pentylen-1,5,4-Oxaheptamethylen oder 3,6-Dioxaoctylen-1,8 handeln.

Ist $R_5$ $C_4$–$C_{22}$ Alkenylen oder Alkinylen, so handelt es sich dabei beispielsweise um 2-Butenylen-1,4; 2-Butinylen-1,4; 2,4-Hexadiinylen-1, oder um Propenylen-1,3 handeln.

$R_5$ ist als $C_5$–$C_9$ Cycloalkylen beispielsweise 1,2-Cyclopentylen, 1,2-Cyclohexylen, 1,3-Cyclohexylen, 1,4-Cyclohexylen, 1,4-Cycloheptylen oder 1,2-Cyclononylen. Bevorzugt besitzt $R_5$ als Cycloalkylen 6 C-Atome.

$R_7$ und $R_8$ sind als $C_1$–$C_8$ Alkyl z.B. Äthyl, n-Propyl, Isopropyl, n-Butyl, n-Phenyl, n-Hexyl oder n-Octyl, bevorzugt sind $R_7$ und $R_8$ jedoch als Alkylgruppen Methyl.

$R_7$ und $R_8$ können ferner mit dem C-Atom an das sie gebunden sind $C_5$–$C_{12}$ Cycloalkyl, bevorzugt Cyclohexyl bilden. Es kann sich dabei um Cyclopentyl, Cyclohexyl, Cycloheptyl, Cyclooctyl oder Cyclododecyl handeln.

r, t und n sind unabhängig voneinander 2, 3, 4, 5 oder 6, bevorzugt sind sie jedoch gleich und sind insbesondere 2 oder 3.

m kann 0, 1, 2 oder 3 sein. Bevorzugt ist n 0 oder 1 und insbesondere 0.

Kommen in den Verbindungen Reste Q vor, so sind diese bevorzugt gleich substituiert wie die übrigen im Molekül vorkommenden Dibenz[d,f] [1,3,2]dioxaphosphepin-6-yl-Reste.

Bevorzugt werden Verbindungen der Formel I, worin $R_1$ und $R_2$ $C_1$–$C_8$ Alkyl sind, und
A eine Gruppe –$N(R_3)R_4$ (III) ist, worin
$R_3$ Wasserstoff, $C_1$–$C_{18}$ Alkyl, $C_3$–$C_4$ Alkenyl, $C_3$–$C_4$ Alkinyl, $C_3$–$C_{24}$ Alkoxycarbonylmethyl oder -äthyl, $C_5$–$C_{12}$ Cycloalkyl, Phenyl, Benzyl, $C_7$–$C_{15}$ Alkaryl, eine unsubstituierte oder substituierte $C_5$–$C_{17}$ Piperidin-4-yl-gruppe oder eine Gruppe der Formel II bedeutet, worin $R_1$ und $R_2$ die oben angegebene Bedeutung haben, und
$R_4$ $C_1$–$C_{18}$ Alkyl, $C_3$–$C_4$ Alkenyl, $C_3$–$C_4$ Alkinyl, $C_3$–$C_{24}$ Alkoxycarbonylmethyl oder -äthyl, $C_5$–$C_{12}$ Cycloalkyl, Phenyl, Benzyl, $C_7$–$C_{15}$ Alkaryl, eine unsubstituierte oder substituierte $C_5$–$C_{17}$ Piperidin-4-yl-gruppe, eine Gruppe der Formel IV oder V ist, worin $R_3$ die oben angegebene Bedeutung hat, und
n 0 oder 1 ist, und
$R_5$ gegebenenfalls mit einem oder zwei Sauerstoff- oder Schwefelatomen unterbrochenes $C_2$–$C_9$ Alkylen ist, oder Cyclohexylen, oder eine Gruppe der Formel VI bedeutet, worin
$R_6$ –O–, –S– oder –$(R_7)C(R_8)$– ist, worin
$R_7$ und $R_8$ unabhängig voneinander Wasserstoff oder Methyl sind, oder
$R_7$ und $R_8$ zusammen mit dem C-Atom, an welches sie gebunden sind Cyclohexylen bilden, oder
$R_7$ und $R_8$ zusammen 1,4-Cyclohexylendimethylen oder 1,3,3-Trimethyl-cyclohexylen-1,5 bedeuten, und
r, t und n 2 oder 3 sind, und
m 0 oder 1 ist, und
Q eine Gruppe der Formel II ist, worin $R_1$ und $R_2$ die oben angegebene Bedeutung haben, oder
$R_3$ und $R_4$ zusammen mit dem N-Atom an das sie gebunden sind einen Pyrrolidin-, Oxazolidin-, Piperidin- oder Morpholinring bilden, oder
$R_3$ und $R_4$ zusammen den Rest –$CH_2CH_2$–N(Q)–$CH_2CH_2$– bedeuten, worin Q die oben angegebene Bedeutung hat.

Interesse gilt Verbindungen der Formel I, worin
$R_1$ α-verzweigtes $C_3$–$C_8$ Alkyl, und
$R_2$ $C_1$–$C_8$ Alkyl ist, und
A eine Gruppe –$N(R_3)R_4$ (III) ist, worin
$R_3$ Wasserstoff $C_1$–$C_{18}$ Alkyl, Allyl, Propargyl, $C_3$–$C_{14}$ Alkoxycarbonylmethyl, $C_3$–$C_{15}$ Alkoxycarbonyläthyl oder $C_5$–$C_8$ Cycloalkyl bedeutet, und
$R_4$ $C_1$–$C_4$ Alkyl, Allyl, Propargyl, $C_3$–$C_{14}$ Alkoxycarbonylmethyl, $C_3$–$C_{15}$ Alkoxycarbonyläthyl, $C_5$–$C_8$ Cycloalkyl oder eine Gruppe der Formel IV oder V bedeutet, worin $R_3$ die oben angegebene Bedeutung hat, und
n 1 ist, und
$R_5$ $C_2$–$C_6$ Alkylen bedeutet, und
r, t und n 2 oder 3 sind, und
m 0 ist, und
Q eine Gruppe der Formel II ist, worin $R_1$ und $R_2$ die oben angegebene Bedeutung haben, oder
$R_3$ und $R_4$ zusammen mit dem N-Atom, an welches sie gebunden sind einen Piperidin- oder Morpholinring bilden, oder
$R_3$ und $R_4$ zusammen den Rest –$CH_2CH_2$–N(Q)–$CH_2$ $CH_2$– bedeuten, worin Q die oben angegebene Bedeutung hat.

Besonders bevorzugt sind Verbindungen der Formel I, worin
$R_1$ und $R_2$ α-verzweigtes $C_3$–$C_8$ Alkyl bedeuten, und
A eine Gruppe –N $(R_3)R_4$ (III) ist, worin
$R_3$ Wasserstoff, $C_1$–$C_{12}$ Alkyl oder Cyclohexyl ist, und
$R_4$ $C_1$–$C_4$ Alkyl, Cyclohexyl oder eine Gruppe der Formel IV ist, worin $R_3$ die oben angegebene Bedeutung hat, und Q eine Gruppe der Formel II ist, worin $R_1$ und $R_2$ die oben angegebene Bedeutung haben, und
n 1 ist, und
$R_5$ $C_2$–$C_6$ Alkylen bedeutet, oder
$R_3$ und $R_4$ zusammen mit dem N-Atom, an welches sie gebunden sind, einen Piperidin- oder Morpholinring bilden, oder

$R_3$ und $R_4$ zusammen den Rest $-CH_2CH_2-N(Q)-CH_2CH_2-$ bedeuten, worin Q die oben angegebene Bedeutung hat.

Beispiele für Verbindungen der Formel I sind:

1) 6-(N,N-Di-n-octylamino)-2,4-8,10-tetra-t.-butyl-dibenz[d,f] [1,3,2]dioxaphosphepin

2) 6-(2'-Aza-3', 3',5'-trimethyl-8'-äthoxy-bicyclo-[4, 4,0]dec-2'-yl-2,4,8,10-tetra-t.-octyl-dibenz[d,f] [1,3, 2]dioxaphosphepin

3) 6-(N-2',6'-Dimethylphenyl-N-cyclohexylamino)-2,10-dimethyl-4,8-di-t.-butyl-dibenz[d,f] [1,3,2]-dioxaphosphepin

4) 6-(N-Cyclododecyl-N-t-.-octylamino)-2,4,8,10-tetra-t.-butyl-dibenz[d,f] [1,3,2]dioxaphosphepin

5) 6-(N-t.-Butylamino)-2,4,8,10-t.-butyl-dibenz-[d,f] [1,3,2]dioxaphosphepin

6) 6-(N-n-Octadecylamino)-2,10-dimethyl-4,8-di-t.-butyl-dibenz[d,f] [1,3,2]dioxaphosphepin

7) 6-(N-Cyclododecylamino)-2,4,8,10-tetra-t.-butyl-dibenz[d,f,] [1,3,2]dioxaphosphepin

8) 6-(N-2',6'-Dimethylphenylamino)-2,10-dime thyl-4,8-di-t.-octyl-dibenz[d,f] [1,3,2]-dioxaphosphepin

9) 6-(N-p-t.-Octylphenyl-N-isopropylamino)-2,4,8,10-tetra-t.-pentyl-dibenz[d,f] [1,3,2]-dioxaphosphepin

10) 6-(N-Cyclohexyl-N-allylamino)-2,4,8,10-tetra-t.-octyl-dibenz [d,f,] [1,3,2] dioxaphosphepin

11) 2,2-Bis-{4'-[N-2'',4'',8'',10''-tetra-t.-butyl-di benz[d,f} [1,3,2]dioxaphosphepin-6''-yl)-amino]-cyclohexyl}-propan

12) N,N'-Bis-(2,4,8,10-tetra-t.-butyl-dibenz[d,f,] [1,3,2]dioxaphosphetin-6-yl)-benzidin

13) N,N'-Bis-(2,4,8,10-tetra-t.-pentyl-dibenz[d,f] [1,3,2] dioxaphosphetin-6-yl)-N,N'-dicyclopentyl-hexamethylen-diamin

14) N,N'-Bis-(2,4,8,10-tetra-t.-butyl-dibenz[d,f] [1,3,2]dioxaphosphetin-6-yl)-N,N'-di-isopropyl-hydrazin

15) N,N'-Bis-(2, 10-di-t.-octyl-4,8-di-t.-butyl-dibenz [d,f] [1,3,2]dioxaphosphetin-6-yl)-N,N'-(1'-isopropyl-2'-methylpropyl)-äthylendiamin

16) N,N'-Bis-(2',4',8',10'-tetra-t.-butyl-dibenz [d,f,] [1,3,2]dioxaphosphepin-6'-yl)-4,9-dioxadodecamethylendiamin

17) N,N'-Bis-(2,10-dimethyl-4,8-di-t.-butyl-dibenz [d,f] [1,3,2]dioxaphosphepin-6-yl)-N,N']-dicycloheptyl-hexamethylendiamin

18) 1,4-Bis-(2',4',8',10'-tetra-t.-butyl-dibenz [d,f] [1,3,2]dioxaphosphepin-6'-yl)-2,5-dimethylpiperazin

19) 1,4-Bis-[N-(2',4',8',10'-tetra-t.-butyl-dibenz[d,f] [1,3,2]dioxaphosphin-6'-yl)-aminopropyl ]-piperazin

20) N,N', N''-Tris-(2,4,8,10-tetra-t.-butyl-dibenz-[d, f,] [1,3,2]dioxaphosphepin-6'-yl)-diäthylentriamin

21) N,N-Bis-[3-[N'-(2',4',8',10'-tetra-t.-butyl-dibenz[d,f] [1,3,2]dioxaphosphepin-6'-yl)-amino-propyl]-N-(2'',4'',8'',10''-tetra-t.-butyl-dibenz-[d,f] [1,3,2]dioxaphosphepin-6''-yl)-amin

22) N,N-Bis-(2,4,8,10-tetra-t.-butyl-dibenz[d,f] [1,3,2]dioxaphosphepin-6-yl)-N-n.-butylamin

23) N,N'-Bis-(2,4,8,10-tetra-t.-pentyl-dibenz-[d,f] [1,3,2]dioxaphosphepin-6-yl)-N,N'-diisopropyl-hydrazin

24) N-Cyclohexyl-N-(2,4,8,10-tetra-t.-butyl-dibenz-[d,f] [1,3,2] dioxaphosphepin-6-yl)-aminosuccinsäure-dioctylester

25) R-N-(Cyclohexyl)- $(CH_2)_3$-N(R)-$(CH_2)_3$-N(R)-$(CH_2)_3$-N(R)-$(CH_2)_3$-N(Cyclohexyl)-R

26) R-N(H)-$[CH_2-CH_2-N(R)]_4-CH_2CH_2-$N(H)R.

In den Formeln 25 und 26 bedeutet R den Rest (2,4,8,10-Tetra-t.-butyl-dibenz[d,f,] [1,3,2]dioxaphosphepin-6-yl):

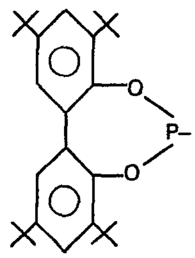

Die Phosphonite der Formel I können nach an sich bekannten Methoden hergestellt werden, insbesondere durch Amidierungs- oder Umamidierungsreaktionen, z.B. dadurch, dass man ein Phosphonit der Formel VII

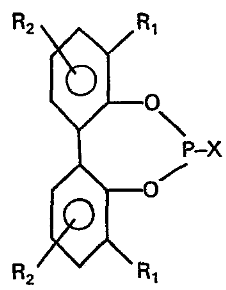

VII,

worin X eine reaktionsfähige Gruppe ist und $R_1$ und $R_2$ die oben angegebene Bedeutung haben, mit einem Amin ZA, insbesondere mit einem Amin der Formel VIII

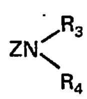

VIII.

worin Z Wasserstoff oder eine Na-, Li- oder K-Atom ist, und $R_3$ und $R_4$ die oben angegebene Bedeutung haben, umsetzt.

Eine reaktionsfähige Gruppe X ist beispielsweise Halogen, insbesondere Chlor, Alkoxy, Phenoxy oder eine primäre oder sekundäre Aminogruppe.

Eine andere Möglichkeit zur Herstellung von Verbindungen der Formel I besteht in der Umsetzung eines Phosphorsäureamids der Formel IX

$$(Hal)_2\text{-P-A} \quad (IX),$$

worin Hal ein Halogenatom insbesondere Chlor bedeutet und A die oben angegebene Bedeutung hat und einem Biphenol der Formel X

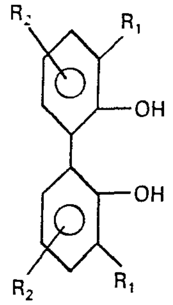

(X),

worin $R_1$ und $R_2$ die oben angegebene Bedeutung haben.

Beide Reaktionstypen können in an sich bekannter Weise erfolgen, z.B. bei −5 °C bis 80 °C, oder durch Erhitzen, bevorzugt auf über etwa 80 °C, z.B. 80–170 °C. Die Reaktion kann ohne oder in Gegenwart eines inerten Lösungsmittels, wie aprotische Lösungsmittel, z.B. Ligroin, Toluol, Xylol, Hexan, Cyclohexyan, Dimethylformamid, Dimethylacetamid, Sulfolan, Acetonitril, Dioxan, Di-n-butyläther, 1,2-Dichloräthan, Dimethylsulfoxid, Essigsäureester, Methyläthylketon, Nitrobenzol, Nitromethan, Tetrahydrofuran, Chloroform oder Trichloräthylen durchgeführt werden. Bedeutet X Halogen, so erfolgt die Reaktion vorteilhaft in Gegenwart einer Base, wie Natriumcarbonat oder einem Amin, z.B. Triäthylamin, Pyridin oder N,N-Dimethylanilin. Es ist aber durchaus möglich, mit einem Überschuss an Amin der Formel VII zu arbeiten, wobei dieser als Säureakzeptor wirkt. Im Überschuss eingesetzte Aminbasen können gleichzeitig als Lösungsmittel dienen.

Die Ausgangsstoffe der Formeln VII, VIII, IX und X sind bekannt, oder können, sofern sie neu sind, in Analogie zu bekannten hergestellt werden. Die Phosphonite der Formel VI können z.B. analog der in Chem. Ber. 89, 1121 (1956) beschriebenen Methode hergestellt werden.

Die Verbindungen der Formel I können gemäss der vorliegenden Erfindung als Stabilisatoren für Kunststoffe und Elastomere gegen deren Schädigung durch Einwirkung von Sauerstoff, Licht und Wärme verwendet werden. Beispiele für solche Kunststoffe sind die in der DT-OS 2 456 864 auf den Seiten 12–14 aufgeführten Polymeren.

Geeignete Substrate sind z.B.:

1. Polymere, die sich von einfach ungesättigten Kohlenwasserstoffen ableiten, wie Polyolefine, wie z.B.
Polyäthylen, niederer und hoher Dichte, das gegebenenfalls vernetzt sein kann, Polypropylen, Polyisobutylen, Polymethylbuten-1, Polymethylpenten-1.
2. Mischungen der unter 1 genannten Homopolymeren, wie z.B. Gemische von Polypropylen und Polyäthylen, Polypropylen und Polybuten-1, Polypropylen und Polyisobutylen.
3. Copolymere der dem unter 1 genannten Homopolymeren zugrundeliegenden Monomeren, wie Äthylen-Propylen-Copolymere, Propylen-Buten-1-Copolymere, Propylen-Isobutylen-Copolymere, Äthylen-Buten-1-Copolymere, sowie Terpolymere von Äthylen und Propylen mit einem Dien, wie z.B. Hexadien, Dicyclopentadien oder Äthylidennorbornen.
4. Polystyrol und seine Copolymeren, wie SAN, ABS, IPS, ASA und EP modifizierte Styrolcopolymerisate.
5. Polyamide.
6. Lineare Polyester.
7. Polyurethane.
8. Polycarbonate.
9. Elastomere, wie Polybutadien, SBR, Polyisopren, Polychloropren und Nitrilkautschuck.
10. Thermoplastische Elastomere, wie SBS, SIS und S-EP-S.
11. Polyvinylchlorid etc..
12. Schmieröle auf synthetischer und mineralischer Basis.

Ein weiterer Gegenstand vorliegender Erfindung ist ein Verfahren zum Stabilisieren von Polymeren gegen den thermooxidativen Abbau während Herstellung, Isolierung, Verarbeitung und Gebrauch, das dadurch gekennzeichnet ist, dass man dem Polymeren mindestens eine Verbindung der Formel I zusetzt.

Die Verbindungen der Formel I werden den Substraten in einer Konzentration von 0,005 bis 5 Gew.-%, berechnet auf das zu stabilisierende Material, einverleibt.

Vorzugsweise werden 0,01 bis 1,0, besonders bevorzugt 0,02 bis 0,5 Gew.-% der Verbindungen, berechnet auf das zu stabilisierende Material, in dieses eingearbeitet. Die Einarbeitung kann beispielsweise durch Einmischen mindestens einer der Verbindungen der Formel I und gegebenenfalls weiterer Additive nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels erfolgen.

Die neuen Verbindungen können auch in Form eines Masterbatches, der diese Verbindungen beispielsweise in einer Konzentration von 2,5 bis 25 Gew.% enthält, den zu stabilisierenden Kunststoffen zugesetzt werden.

Im Falle von vernetztem Polyäthylen werden die Verbindungen vor der Vernetzung beigefügt.

Die Erfindung betrifft daher auch die durch Zusatz von 0,01 bis 5 Gew.-% einer Verbindung der Formel I stabilisierten Kunststoffe, die gegebenenfalls noch andere Zusätze enthalten können. Die so stabilisierten Kunststoffe können in verschiedenster Form angewendet werden, z.B. als Folien, Fasern, Bändchen, Profile oder als Bindemittel für Lacke, Klebemittel oder Kitte.

Als Beispiele weiterer Additive, mit denen zusammen die Stabilisatoren eingesetzt werden können, sind zu nennen: Antioxydantien, UV-Absorber und Lichtschutzmittel, wie 2-(2'-Hydroxyphenyl) -benztriazole, 2,4-Bis-(2'-hydroxyphenyl)-6-alkyl-s-triazine, 2-Hydroxybenzophenone, 1,3-Bis-(2'-hydroxybenzoyl)-benzole, Ester von gegebenenfalls substituierten Benzoesäuren, Acrylate, des weiteren Nickelverbindungen, sterisch gehinderte Amine, Oxalsäurediamide, Metalldesaktivatoren, Phosphite, peroxidzerstörende Verbindungen, Polyamidstabilisatoren, basische Co-Stabilisatoren, Nukleierungsmittel oder sonstige Zusätze wie z.B. Weichmacher, Gleitmittel, Emulgatoren, Füllstoffe, Russ, Asbest, Kaolin, Talk, Glasfasern, Pigmente, optische Aufheller, Flammschutzmittel, Antistatica.

Die Erfindung wird mit dem nachfolgenden Beispiel näher erläutert:

Beispiel 1

a) In einem Gemisch aus 217,5 ml Phosphortrichlorid (2,5 Mol) und 200 ml Toluol tropft man eine Lösung aus 49,3 ml Piperidin (0,5 Mol), 70 ml Triäthylamin und 100 ml Toluol. Danach wird das Gemisch nach einstündigem Rühren bei 0–5 °C für 10h bei Rückflusstemperatur gehalten. Nach beendeter Reaktion filtriert man vom Hydrochlorid ab und unterwirft den Rückstand einer Vakuumdestillation. Das Phosphorsäure-piperididchlorid siedet bei 55 °C/0,4 mm Hg.

b) 9,3 g (0,05 Mol) Phosphorigsäure-piperididdichlorid, und 20,5 g (0,05 Mol) 4,4',6,6'-Tetra-t.-butyl-2,2'-biphenol werden in 50 ml Triäthylamin für 20h am Rückfluss gehalten. Nach Abtrennen des Hydrochlorids und Entfernen des überschüssigen Triäthylamins erhält man das N-(2,4,8,10-Tetra-t.-butyl-dibenz[d,f,] [1,3,2]dioxaphosphepin-6-yl)-piperidin als amorphen Rückstand.

Elementar-Analyse:

| | | | | |
|---|---|---|---|---|
| Berechnet | C 75,68% | H 9,62% | N 2,6% | P 5,9% |
| Gefunden | C 76,2 % | H 9,5 % | N 2,6% | P 5,8%. |

Beispiel 2

170 g (0,414 Mol), 4,4',6,6'-Tetra-t.-butyl-2,2'-biphenol in 150 ml Toluol werden unter Stickstoffatmosphäre auf 80–90 °C erwärmt und während 2 Stunden 40 ml (0,458 Mol) Phosphortrichlorid zugetropft. Die Reaktionsmischung wird bei Rückflusstemperatur während 4 h gerührt und gegen Ende der Reaktion erneut Stickstoffgas eingeleitet. Danach wird bei Rückflusstemperatur eine Lösung von 53,5 g (0,414 Mol) Dibutylamin und 41,9 g (0,414 Mol) Triäthylamin in 80 ml Toluol während 1½ Stunden zugetropft. Nach 15 Stunden lässt man das Reaktionsgemisch auf Raumtemperatur abkühlen und filtriert das ausgefallene Triäthylamin-hydrochlorid ab. Danach wird das Toluol abgedampft. Das so erhaltene N-(2,4,8,10-Tetra-t.-butyl-dibenz[d,f] [1,3,2]dioxaphosphepin-6-yl)-dibutylamin besitzt einen Schmelzpunkt von 140 °C.

Beispiele 3–10

170 g (0,414 Mol) 4,4',6,6'-Tetra-t-butyl-2,2'-bisphenol und 36,1 ml Phosphortrichlorid werden in 150 ml Xylol auf 110–115 °C erwärmt. Nach 4 Stunden wird der Reaktionsmasse während 1,5 Stunden eine Lösung aus 36,1 g (0,414 Mol) Morpholin und 58 ml Triäthylamin in 80 ml Xylol zugetropft und für weitere 20 Stunden bei 110–120 °C gerührt. Danach trennt man vom Triäthylamino-hydrochlorid ab, zieht das Lösungsmittel am Vakuum ab und erhält das Produkt N(2,4,8,10-Tetra-t-butyl-dibenz[d,f] [1,2, 3]dioxaphosphepin-6-yl)-morpholin als kristallinen Rückstand (Fp. 140 °–43 °C)

Verfährt man wie in Beispiel 3 beschrieben, so erhält man die folgenden Produkte.

| Nr. | Formel | Schmelzpunkt |
|---|---|---|
| 4 | N-(2,4,8,10-Tetra-t.butyl-dibenz'd,f] [1,3,2]dioxaphosphepin-6-yl)-diisopropylamin | 189 °C |
| 5 | N-(2,4,8,10-Tetra-t.-butyl-dibenz[d,f] [1,3,2]dioxaphosphepin-6-yl)-dicyclohexylamin | 270 °C |
| 6 | N-(4,8-Di-t.butyl-2,10-di-t.octyl-dibenz[d,f] [1,3,2]dioxaphosphepin-6-yl)-morpholin | 131–134 °C |
| 7 | N,N'-Di-(2,4,8,10-tetra-t.-butyl-dibenz[d,f] [1,3,2]dioxaphosphepin-6-yl)-piperazin | 260 °C |
| 8 | N-(2,4,8,10-Tetra-t.-butyl-dibenz[d,f] [1,3,2]dioxaphosphepin-6-yl)-p-dodecyl-phenylamin | Charakterisierung<br>Öl<br>ber. P 4,42%; N 2,00%<br>gef. P 3,57%; N 1,8 % |
| 9 | N,N'-Di-(2,4,8,10-Tetra-t.-butyl-dibenz[d,f] [1,3,2]dioxaphosphepin-6-yl)-äthylendiamin | 260 °C |
| 10 | N-(2,4,8,10-Tetra-t.octyl-dibenz[ d,f] [1,3,2]dioxaphosphepin-6-yl)-dibutylamin | Öl |

Beispiel 11

100 Teile Polyäthylen hoher Dichte mit einem Molekulargewicht von ca. 500 000 (« Lupolen 5260 Z» in Pulverform der Firma BASF) enthaltend 0,05 Teile Pentaerithrittetra-[3,5-di-t.butyl-4-hydroxyphenyl)-propionat] werden mit je 0,1 Teilen der Phosphonite der untenstehenden Tabelle 1 trokken gemischt. Die Mischungen werden in einem Brabender-Plastographen bei 220 °C und 50 Upm geknetet.

Während dieser Zeit wird der Knetwiderstand als Drehmoment kontinuierlich registriert. Infolge Vernetzung des Polymeren erfolgt im Verlaufe der Knetzeit nach anfänglicher Konstanz eine rasche

Zunahme des Drehmoments. Die Wirksamkeit der Stabilisatoren äussert sich in einer Verlängerung der Konstantzeit.

Tabelle 1

| Teile Phosphonit | Zeit in Minuten bis Änderung des Drehmomentes |
|---|---|
| Keines | 3 |
| 0,1 Teil Verbindung 1 | 17,5 |
| 0,1 Teil Verbindung 4 | 13,5 |
| 0,1 Teil Verbindung 5 | 9,5 |

**Patentansprüche**

1. Verbindungen der Formel

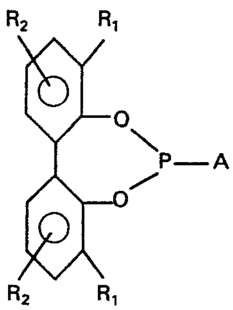
(I),

worin
$R_1$ $C_1$–$C_{18}$ Alkyl und
$R_2$ Wasserstoff oder $C_1$–$C_{18}$ Alkyl bedeutet, und
A eine durch aliphatische, alicyclische, aromatische oder araliphatische Reste substituierte Aminogruppe, eine heterocyclische Aminogruppe oder ein Hydrazinderivat bedeutet.

2. Verbindungen gemäss Anspruch 1 der Formel I, worin A eine Gruppe $-N(R_3)R_4$ (III) ist, worin $R_3$ Wasserstoff, $C_1$–$C_{22}$ Alkyl, $C_2$–$C_{21}$ Oxa- oder Thiaalkyl, $C_3$–$C_{18}$ Alkenyl, $C_3$–$C_{18}$ Alkinyl, $C_2$–$C_6$ Hydroxyalkyl, $C_3$–$C_{24}$ Alkoxycarbonylalkyl, $C_5$–$C_{12}$ Cycloalkyl, $C_6$–$C_{14}$ Aryl, $C_7$–$C_{15}$ Alkaryl, $C_7$–$C_{15}$ Aralkyl, eine unsubstituierte oder substituierte $C_5$–$C_{17}$ Piperidin-4-ylgruppe oder eine Gruppe der Formel II

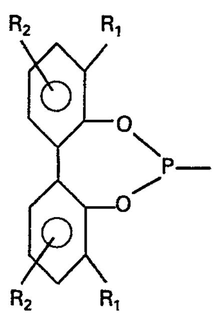
(II).

bedeutet, worin $R_1$ und $R_2$ die oben angegebene Bedeutung haben, und
$R_4$ $C_1$–$C_{22}$ Alkyl, $C_2$–$C_{21}$ Oxa- oder Thiaalkyl, $C_3$–$C_{18}$ Alkenyl, $C_3$–$C_{18}$ Alkinyl, $C_2$–$C_6$ Hydroxyalkyl, $C_3$–$C_{24}$ Alkoxycarbonylalkyl, $C_5$–$C_{12}$ Cycloalkyl, $C_6$–$C_{14}$ Aryl, $C_7$–$C_{15}$ Alkaryl, $C_7$–$C_{15}$ Aralkyl, eine unsubstituierte oder substituierte $C_5$–$C_{17}$ Piperidin-4-ylgruppe, eine Gruppe der Formel IV

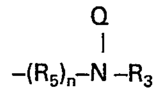
(IV) oder

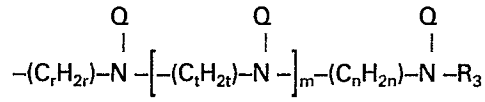
(V),

worin
$R_3$ die oben angegebene Bedeutung hat, und
n 0 oder 1 ist, und
$R_5$ gegebenenfalls mit einem oder zwei Sauerstoff- oder Schwefelatomen unterbrochenes $C_2$–$C_{22}$ Alkylen, $C_4$–$C_{22}$ Alkenylen, $C_4$–$C_{22}$ Alkinylen, $C_5$–$C_9$ Cycloalkylen, oder eine Gruppe der Formel VI–

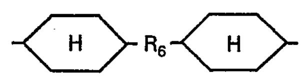
ist, worin $R_6$ –O–, –S– oder $-(R_7)C(R_8)-$ ist, wobei $R_7$ und $R_8$ unabhängig voneinander Wasserstoff oder $C_1$–$C_8$ Alkyl sind oder $R_7$ und $R_8$ zusammen mit dem C-Atom, an das sie gebunden sind, $C_5$–$C_{12}$ Cycloalkyl ergeben, oder $R_7$ und $R_8$ bedeuten zusammen 1,4-Cyclohexylendimethylen oder 1,3,3-Trimethyl-cyclohexylen-1,5 und worin $R_5$ ferner Phenylen, Biphenylen oder eine Gruppe der Formel

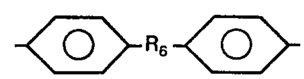
bedeutet,

wobei $R_6$ die oben angegebene Bedeutung hat, und
r, t und n unabhängig voneinander 2, 3, 4, 5 oder 6 sind, und
m 0,1,2 oder 3 ist, und
Q eine Gruppe der Formel II bedeutet, worin $R_1$ und $R_2$ die oben angegebene Bedeutung haben, oder
$R_3$ und $R_4$ ferner zusammen mit dem N-Atom, an das sie gebunden sind, substituiertes Pyrrolidin, Oxazolidin, Piperidin oder Morpholin bedeuten, oder $R_3$ und $R_4$ zusammen den Rest $-CH_2-CH_2-N(Q)-CH_2-CH_2-$ bilden, worin Q die oben angegebene Bedeutung hat.

3. Verbindungen gemäss Anspruch 1 der Formel I, worin
$R_1$ und $R_2$ $C_1$–$C_8$ Alkyl sind, und
A eine Gruppe $-N(R_3)R_4$ (III) ist, worin
$R_3$ Wasserstoff, $C_1$–$C_{18}$ Alkyl, $C_3$–$C_4$ Alkenyl, $C_3$–$C_4$ Alkinyl, $C_3$–$C_{24}$ Alkoxycarbonylmethyl oder -äthyl, $C_5$–$C_{12}$ Cycloalkyl, Phenyl, Benzyl, $C_7$–$C_{15}$ Alkaryl, eine unsubstituierte oder substituierte $C_5$–$C_{17}$ Piperidin-4-yl-gruppe oder eine Gruppe der Formel II bedeutet, worin $R_1$ und $R_2$ die oben angegebene Bedeutung haben, und
$R_4$ $C_1$–$C_{18}$ Alkyl, $C_3$–$C_4$ Alkenyl, $C_3$–$C_4$ Alkinyl, $C_3$–$C_{24}$ Alkoxycarbonylmethyl oder -äthyl, $C_5$–$C_{12}$ Cycloalkyl, Phenyl, Benzyl, $C_7$–$C_{15}$ Alkaryl, eine un-

substituierte oder substituierte $C_5$–$C_{17}$ Piperidin-4-yl-gruppe, eine Gruppe der Formel IV oder V ist, worin $R_3$ die oben angegebene Bedeutung hat, und
n 0 oder 1 ist, und
$R_5$ gegebenenfalls mit einem oder zwei Sauerstoff- oder Schwefelatomen unterbrochenes $C_2$–$C_9$ Alkylen ist, oder Cyclohexylen, oder eine Gruppe der Formel VI bedeutet, worin
$R_6$ –O–, –S– oder –( $R_7$)C($R_8$)– ist, worin
$R_7$ und $R_8$ unabhängig voneinander Wasserstoff oder Methyl sind oder
$R_7$ und $R_8$ zusammen mit dem C-Atom, an welches sie gebunden sind Cyclohexylen bilden, oder
$R_7$ und $R_8$ zusammen 1,4-Cyclohexylendimethylen oder 1,3,3-Trimethyl-cyclohexylen-1,5 bedeuten, und
r, t und n 2 oder 3 sind, und
m 0 oder 1 ist, und
Q eine Gruppe der Formel II ist, worin $R_1$ und $R_2$ die oben angegebene Bedeutung haben, oder
$R_3$ und $R_4$ zusammen mit dem N-Atom an das sie gebunden sind, einen Pyrrolidin-, Oxozolidin-, Piperidin- oder Morpholinring bilden, oder
$R_3$ und $R_4$ zusammen den Rest $-CH_2CH_2-N(Q)-CH_2CH_2-$ bedeuten, worin Q die oben angegebene Bedeutung hat.

4. Verbindungen gemäss Anspruch 1 der Formel I,
worin
$R_1$ α-verzweigtes $C_3$–$C_8$ Alkyl, und
$R_2$ $C_1$–$C_8$ Alkyl ist, und
A eine Gruppe $-N(R_3)R_4$ (III) ist, worin
$R_3$ Wasserstoff $C_1$–$C_{18}$ Alkyl, Allyl, Propargyl, $C_3$–$C_{14}$ Alkoxycarbonylmethyl, $C_3$–$C_{15}$ Alkoxycarbonyläthyl oder $C_5$–$C_8$ Cycloalkyl bedeutet, und
$R_4$ $C_1$–$C_4$ Alkyl, Allyl, Propargyl, $C_3$–$C_{14}$ Alkoxycarbonylmethyl, $C_3$–$C_{15}$ Alkoxycarbonyläthyl, $C_5$–$C_8$ Cycloalkyl oder eine Gruppe der Formel IV oder V bedeutet, worin $R_3$ die oben angegebene Bedeutung hat, und
n 1 ist, und
$R_5$ $C_2$–$C_6$ Alkylen bedeutet,und
r,t und n 2 oder 3 sind, und
m 0 ist, und
Q eine Gruppe der Formel II ist, worin $R_1$ und $R_2$ die oben angegebene Bedeutung haben, oder
$R_3$ und $R_4$ zusammen mit dem N-Atom, an welches sie gebunden sind, einen Piperidin- oder Morpholinring bilden, oder
$R_3$ und $R_4$ zusammen den Rest $-CH_2CH_2-N(Q)-CH_2CH_2-$ bedeuten, worin Q die oben angegebene Bedeutung hat.

5. Verbindungen gemäss Anspruch 1 der Formel I,
worin
$R_1$ und $R_2$ α-verzweigtes $C_3$–$C_8$ Alkyl bedeutet, und
A eine Gruppe $-N(R_3)R_4$ (III) ist, worin
$R_3$ Wasserstoff, $C_1$–$C_{12}$ Alkyl oder Cyclohexyl ist, und
$R_4$ $C_1$–$C_4$ Alkyl, Cyclohexyl oder eine Gruppe der Formel IV ist, worin $R_3$ die oben angegebene Bedeutung hat, und Q eine Gruppe der Formel II ist, worin $R_1$ und $R_2$ die oben angegebene Bedeutung haben, und
n 1 ist, und
$R_5$ $C_2$–$C_6$ Alkylen bedeutet, oder
$R_3$ und $R_4$ zusammen mit dem N-Atom, an welches sie gebunden sind, einen Piperidin- oder Morpholinring bilden, oder
$R_3$ und $R_4$ zusammen den Rest $-CH_2CH_2-N(Q)-CH_2CH_2-$ bedeuten, worin Q die oben angegebene Bedeutung hat.

6. Verbindungen gemäss Anspruch 1 der Formel I, worin $R_1$ und $R_2$ t.-Butyl oder 1,1,3,3-Tetramethylbutyl sind und A die angegebene Bedeutung hat.

7. Verwendung der Verbindungen gemäss Anspruch 1 der Formel I zum Stabilisieren von organischem Material.

8. Verwendung gemäss Anspruch 7, dadurch gekennzeichnet, dass das zu stabilisierende organische Material Polyolefin ist.

9. Verfahren zur Herstellung von Verbindungen der Formel I gemäss Anspruch 1, dadurch gekennzeichnet, dass man ein Phosphonit der Formel VII

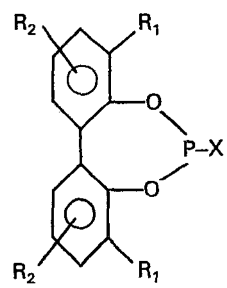

VII,

worin X eine reaktionsfähige Gruppe ist und $R_1$ und $R_2$ die in Anspruch 1 angegebene Bedeutung haben, mit einem Amin ZA, worin Z Wasserstoff oder ein Na-, Li- oder K-Atom ist, und A die in Anspruch 1 angegebene Bedeutung hat, umsetzt, oder ein Phosphorsäureamid der Formel IX

$$(Hal)_2-P-A \quad (IX),$$

worin Hal ein Halogenatom ist und A die angegebene Bedeutung hat, mit einem Biphenol der Formel X

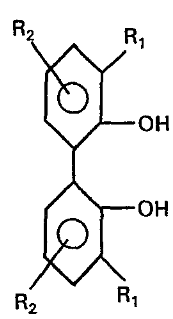

(X),

worin $R_1$ und $R_2$ die oben angegebene Bedeutung haben, umsetzt.

10. Verbindungen gemäss Anspruch 1 der Formel I, worin A $-N(R_3)R_4$ ist, wobei $R_3$ eine Piperidin-4-yl-gruppe der Formel XI

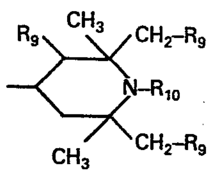

(XI)

ist, worin $R_9$ Wasserstoff oder Methyl bedeutet, und $R_{10}$ Wasserstoff, Oxyl, $C_1$–$C_{18}$ Alkyl, $C_3$–$C_8$ Alkenyl, $C_3$–$C_6$ Alkinyl, $C_7$–$C_{12}$ Aralkyl, $C_2$–$C_{21}$ Alkoxyalkyl, eine aliphatische Acylgruppe mit 1–4 C-Atomen oder eine Gruppe $-CH_2COOR_{11}$, wobei $R_{11}$ $C_1$–$C_{12}$ Alkyl, $C_3$–$C_8$ Alkenyl, Phenyl, $C_7$–$C_8$ Aralkyl oder Cyclohexyl bedeutet und $R_4$ die in Anspruch 2 angegebene Bedeutung hat und die übrigen Symbole die in Anspruch 1 angegebene Bedeutung haben.

11. Verbindungen gemäss Anspruch 1 der Formel I, worin A $-N(R_3)R_4$ ist, wobei $R_3$ und $R_4$ je eine Gruppe der Formel XI bedeuten, worin $R_9$ und $R_{10}$ die in Anspruch 10 angegebene Bedeutung haben und die übrigen Symbole die in Anspruch 1 angegebene Bedeutung haben.

12. Verbindungen gemäss den Ansprüchen 10 und 11, wobei in den Resten der Formel XI $R_9$ Wasserstoff und $R_{10}$ Wasserstoff, $C_1$–$C_8$ Alkyl, Allyl, Benzyl oder Acetyl ist.

13. Verbindungen gemäss Anspruch 12, wobei $R_9$ Wasserstoff und $R_{10}$ Wasserstoff, Methyl oder Acetyl ist.

14. N-(2,4,8,10-Tetra-t.butyldibenz[d,f,] [1,3,2]-dioxaphosphepin-6-yl)-piperidin oder N-(2,4,8,10-Tetra-t.-butyldibenz[d,f] [1,3,2]dioxaphosphepin-6-yl)-dibutylamin gemäss Anspruch 1.

**Revendications**

1. Composés répondant à la formule I

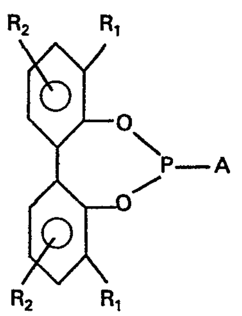

(I),

dans laquelle
$R_1$ désigne un groupe alkyle en $C_1$ à $C_{18}$,
$R_2$ désigne l'hydrogène ou un alkyle en $C_1$ à $C_{18}$ et
A un groupe amino substitué par des radicaux aliphatiques, alicycliques, aromatiques ou araliphatiques, un groupe amino hétérocyclique ou un dérivé de l'hydrazine.

2. Composés de formule I suivant la revendication 1, dans lesquels A désigne un groupe $-N(R_3)R_4$ (III), où
$R_3$ désigne l'hydrogène, un radical alkyle en $C_1$ à $C_{22}$, un radical oxa- ou thia-alkyle en $C_2$ à $C_{21}$, un radical alcényle en $C_3$ à $C_{18}$, un radical alcynyle en $C_3$ à $C_{18}$, un radical hydroxyalkyle en $C_2$ à $C_6$, un radical alcoxycarbonylalkyle en $C_3$ à $C_{24}$, un radical cycloalkyle en $C_5$ à $C_{12}$, un radical aryle en $C_6$ à $C_{14}$, un radical alkaryle en $C_7$ à $C_{15}$, un radical aralkyle en $C_7$ à $C_{15}$, un groupe pipéridine-4-yle non substitué ou substitué en $C_5$ à $C_{17}$, ou un groupe répondant à la formule II

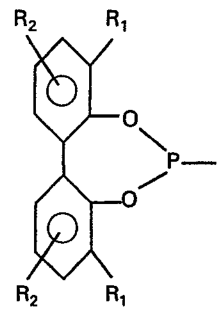

(II).

dans laquelle $R_1$ und $R_2$ ont la signification indiquée ci-dessus et
$R_4$ désigne un alkyle en $C_1$ à $C_{22}$, un oxa- ou thia-alkyle en $C_2$ à $C_{21}$ un alcényle en $C_3$ à $C_{18}$, un alcynyle en $C_3$ à $C_{18}$, un hydroxy-alkyle en $C_2$ à $C_6$, un alcoxy-carbonyl-alkyle en $C_3$ à $C_{24}$, un cycloalkyle en $C_5$ à $C_{12}$, un aryle en $C_6$ à $C_{14}$, un aralkyle en $C_7$ à $C_{15}$, un aralkyle en $C_7$ à $C_{15}$, un groupe pipéridine-4-yle non substitué ou substitué en $C_5$ à $C_{17}$, un groupe répondant à la IV

$$-(R_5)_n-\overset{\overset{Q}{|}}{N}-R_3 \qquad (IV)$$

ou à la formule V

$$-(C_rH_{2r})-\overset{\overset{Q}{|}}{N}-\left[-(C_tH_{2t})-\overset{\overset{Q}{|}}{N}-\right]_m-(C_nH_{2n})-\overset{\overset{Q}{|}}{N}-R_3 \qquad (V)$$

dans lesquelles
$R_3$ a la signification indiquée ci-dessus,
n est égal à 0 ou à 1,
$R_5$ désigne un alkylène en $C_2$ à $C_{22}$, éventuellement interrompu par 1 ou 2 atomes d'oxygène ou de soufre, un alcénylène en $C_4$ à $C_{22}$, un alcynylène en $C_4$ à $C_{22}$, un cycloalkylène en $C_5$ à $C_9$ ou un groupe répondant à la formule VI

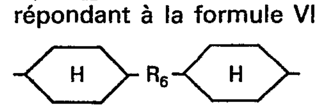

dans laquelle $R_6$ est –O–, –S– ou $-(R_7)C(R_8)-$, $R_7$ et $R_8$ désignant chacun indépendamment l'un de l'autre l'hydrogène ou un alkyle en $C_1$ à $C_8$ à moins que $R_7$ et $R_8$ ne forment ensemble et avec l'atome de carbone auquel ils sont liés un cycloalkyle en $C_5$ à $C_{12}$, ou à moins que $R_7$ et $R_8$ ne désignent ensemble un radical 1,4-cyclohexylène-diméthylène ou 1,3,3-triméthyl-cyclohexylène-1,5, ou encore $R_5$ désigne un radical phénylène biphénylène ou un groupe répondant à la formule

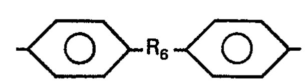

dans laquelle $R_6$ a la signification indiquée ci-dessus
r,t et n désignent chacun indépendamment les uns des autres l'un des nombres 2, 3, 4, 5, et 6,
m est égal à 0, 1, 2 ou 3 et
Q désigne un groupe répondant à la formule II dans laquelle $R_1$ et $R_2$ ont la signification indiquée ci-dessus
ou
$R_3$ et $R_4$ forment ensemble et avec l'atome d'azote auquel ils sont liés une pyrrolidine substituée, une oxazolidine, une pipéridine ou une morpholine
ou
$R_3$ et $R_4$ forment ensemble un radical $-CH_2-CH_2-N(Q)-CH_2-CH_2-$ dans lequel Q a la signification indiquée ci-dessus.

3. Composés de formule I suivant la revendication 1 dans lesquels
$R_1$ et $R_2$ sont des alkyles en $C_1$ à $C_{18}$,
A désigne un groupe $-N(R_3)R_4$ (III), où
$R_3$ est l'hydrogène, un alkyle en $C_1$ à $C_{18}$, un alcényle en $C_3$ ou $C_4$, un alcynyle en $C_3$ ou $C_4$, un alcoxycarbonyl-méthyle ou -éthyle en $C_3$ à $C_{24}$, un cycloakyle en $C_5$ à $C_{12}$, un phényle, un benzyle, un alkaryle en $C_7$ à $C_{15}$, un groupe pipéridine-4-yle en $C_5$ à $C_{17}$ substitué ou non substitué ou un groupe répondant à la formule II dans laquelle $R_1$ et $R_2$ ont la signification indiquée ci-dessus, et
$R_4$ désigne un alkyle en $C_1$ à $C_{18}$, un alcényle en $C_3$ ou $C_4$, un alcynyle en $C_3$ ou $C_4$, un alcoxycarbonyl-méthyle ou -éthyle en $C_3$ à $C_{24}$, un cycloalkyle en $C_5$ à $C_{12}$, un phényle, un benzyle, un alkaryle en $C_7$ à $C_{15}$, un groupe pipéridine-4-yle substitué ou non substitué en $C_5$ à $C_{17}$, un groupe de formule IV ou V dans lequel $R_3$ a la signification indiquée ci-dessus,
est égal à 0 ou 1,
$R_5$ désigne un alkylène en $C_2$ à $C_9$ éventuellement interrompu par un ou deux atomes d'oxygène ou de soufre, ou un cyclohexylène, ou un groupe de formule VI dans lequel
$R_6$ est $-O-$, $-S-$ ou $-(R_7)C(R_8)-$, où
$R_7$ et $R_8$ désignent chacun, indépendamment l'un de l'autre, l'hydrogène ou un groupe méthyle, ou
$R_7$ et $R_8$ forment ensemble et avec l'atome de carbone auquel ils sont liés un groupe cyclohexylène ou
$R_7$ et $R_8$ désignent ensemble le radical 1,4-cyclohexylène-diméthylène ou 1,3,3-triméthyl-cyclohexylène-1,5,
r, t et n sont égaux à 2 ou 3,
m est égal à 0 ou 1, et
Q est un groupe de formule II dans lequel $R_1$ et $R_2$ ont la signification indiquée ci-dessus,ou encore
$R_3$ et $R_4$ forment ensemble et avec l'atome N auquel ils sont liés un cycle de pyrrolidine, d'oxazolidine, de pipéridine ou de morpholine
ou
$R_3$ et $R_4$ désignent ensemble le radical $-CH_2CH_2-N(Q)-CH_2CH_2-$ dans lequel
Q a la signification indiquée ci-dessus.

4. Composés de formule I suivant la revendication 1, dans lesquels
$R_1$ désigne un alkyle en $C_3$ à $C_8$ α-ramifié,
$R_2$ est un alkyle en $C_1$ à $C_8$ et
A est un groupe $-N(R_3)$ $R_4$ (III), où
$R_3$ désigne l'hydrogène, un alkyle en $C_1$ à $C_{18}$, un allyle, un propargyle, un alcoxycarbonylméthyle en $C_3$ à $C_{14}$, un alcoxycarbonyléthyle en $C_3$ à $C_{15}$ ou un cycloalkyle en $C_5$ à $C_8$, et
$R_4$ désigne un alkyle en $C_1$ à $C_4$, un allyle, un propargyle, un alcoxycarbonylméthyle en $C_3$ à $C_{14}$, un alcoxycarbonyléthyle en $C_3$ à $C_{15}$, un cycloalkyle en $C_5$ à $C_8$ ou un groupe de formule IV ou V dans lequel $R_3$ a la signification indiquée ci-dessus,
n est égal à 1,
$R_5$ désigne un alkylène en $C_2$ à $C_6$,
r, t et n sont égaux à 2 ou 3,
m est égal à 0, et
Q est un groupe de formule II dans lequel $R_1$ et $R_2$ ont la signification indiquée ci-dessus
ou
$R_3$ et $R_4$ forment ensemble et avec l'atome d'azote auquel ils sont liés un cycle de pipéridine ou de morpholine,
à moins que
$R_3$ et $R_4$ ne forment ensemble un radical $-CH_2CH_2-N(Q)-CH_2CH_2-$ dans lequel Q a la signification indiquée ci-dessus.

5. Composés de formule I suivant la revendication 1 dans lesquels
$R_1$ et $R_2$ désignent un alkyle en $C_3$ à $C_8$ α-ramifié,
A désigne un groupe $-N(R_3)R_4$ (III), où
$R_3$ est l'hydrogène, un alkyle en $C_1$ à $C_{18}$ ou un cyclohexyle et
$R_4$ désigne un alkyle en $C_1$ à $C_4$, un cyclohexyle ou un groupe de formule IV dans lequel $R_3$ a la signification indiquée ci-dessus et Q est un groupe de formule II dans lequel $R_1$ et $R_2$ ont la signification indiquée ci-dessus,
n est égal à 1, et
$R_5$ désigne un alkylène en $C_2$ à $C_6$,
ou
$R_3$ et $R_4$ forment ensemble et avec l'atome d'azote auquel ils sont liés un cycle de pipéridine ou de morpholine, à moins que
$R_3$ et $R_4$ ne forment ensemble un radical $-CH_2CH_2-N(Q)-CH_2CH_2-$ dans lequel
Q a la signification indiquée ci-dessus.

6. Composés de formule I suivant la revendication 1 dans lesquels $R_1$ et $R_2$ désignent chacun un radical tert-butyle ou tétraméthyl-1,1,3,3 butyle, et A a la signification indiquée ci-dessus.

7. Utilisation des composés suivant la revendication 1, répondant à la formule I, pour la stabilisation de matières organiques.

8. Utilisation suivant la revendication 7, caractérisée en ce que la matière organique à stabiliser est une polyoléfine.

9. Procédé de préparation de composés répondant à la formule I suivant la revendication 1, caractérisé en ce qu'on fait réagir un phosphite répondant à la formule VII

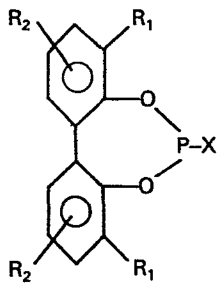

VII,

dans laquelle X est un groupe réactif et $R_1$ et $R_2$ ont la signification indiquée dans la revendication 1, avec une amine ZA, où Z désigne l'hydrogène ou un atome Na, Li ou K, et A a la signification indiquée dans la revendication 1, ou un amide de l'acide phosphorique répondant à la formule IX

$(Hal)_2\,P{-}A$ (IX)

dans laquelle Hal est un atome d'halogène et A a la signification indiquée ci-dessus, avec un bisphénol répondant à la formule X

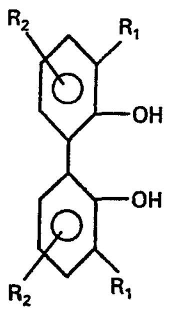

(X),

dans laquelle $R_1$ et $R_2$ ont la signification indiquée ci-dessus.

10. Composés de formule I selon la revendication 1, dans lesquels A est $-N(R_3)R_4$, où $R_3$ est un groupe pipéridine-4-yle répondant à la formule XI

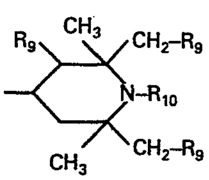

(XI)

dans laquelle $R_9$ désigne l'hydrogène ou un groupe méthyle, et $R_{10}$ désigne l'hydrogène, un groupe oxyle, alkyle en $C_1$ à $C_{18}$, alcényle en $C_3$ à $C_8$, alcynyle en $C_3$ à $C_6$, alkaryle en $C_7$ à $C_{12}$, alcoxyalkyle en $C_2$ à $C_{21}$, un groupe acyle aliphatique en $C_1$ à $C_4$ ou un groupe $-CH_2-COOR_{11}$, où $R_{11}$ désigne un alkyle en $C_1$ à $C_{12}$, un alcényle en $C_3$ à $C_8$, un phényle, un aralkyle en $C_7$ à $C_8$ ou un cyclohexyle, et $R_4$ a la signification indiquée dans la revendication 2 et les autres symboles ont la signification indiquée dans la revendication 1.

11. Composés de formule I selon la revendication 1 dans lesquels A est $-N(R_3)R_4$, $R_3$ et $R_4$ désignant chacun un groupe de formule XI dans lequel $R_9$ et $R_{10}$ ont la signification indiquée dans la revendication 10 et les autres symboles la signification indiquée dans la revendication 1.

12. Composés suivant l'une quelconque des revendications 10 et 11, dans lesquels, dans les radicaux répondant à la formule XI, $R_9$ est l'hydrogène, $R_{10}$ est un alkyle en $C_1$ à $C_8$, un allyle, un benzyle ou un acétyle.

13. Composés suivant la revendication 12 dans lesquels $R_9$ est l'hydrogène et $R_{10}$ l'hydrogène ou un groupe méthyle ou acétyle.

14. N-(2,4,8,10-Tétra-tert-butyldibenzo[d,f][1,3,2]-[dioxaphosphépinne-6-yl)-pipéridine ou N-(2,4,8,10-tétra-tert-butyl-dibenzo[d,f]1,3,2]-dioxaphosphépinne-6-yl)-dibutylamine suivant la revendication 1.

**Claims:**

1. A compound of the formula I

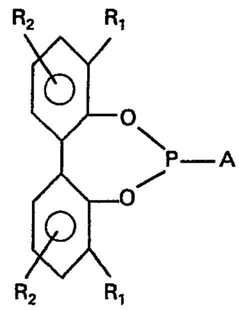

(I),

wherein
$R_1$ is $C_1$–$C_{18}$ alkyl,
$R_2$ is hydrogen or $C_1$–$C_{18}$ alkyl, and
A is an amino group substituted by aliphatic, alicyclic, aromatic or araliphatic radicals, or it is a heterocyclic amino group or a hydrazine derivative.

2. A compound according to Claim 1 of the formula I wherein
A is a group $-N(R_3)R_4$ (III), wherein
$R_3$ is hydrogen, $C_1$–$C_{22}$ alkyl, $C_2$–$C_{21}$ oxa- or thiaalkyl, $C_3$–$C_{18}$ alkenyl, $C_3$–$C_{18}$ alkynyl, $C_2$–$C_6$ hydroxyalkyl, $C_3$–$C_{24}$ alkoxycarbonylalkyl, $C_5$–$C_{12}$ cycloalkyl, $C_6$–$C_{14}$ aryl, $C_7$–$C_{15}$ alkaryl, $C_7$–$C_{15}$ aralkyl, an unsubstituted or substituted $C_5$–$C_{17}$ piperidin-4-yl group, or a group of the formula II

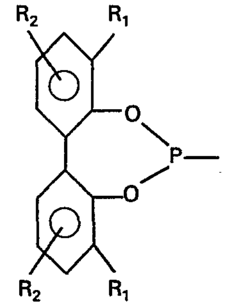

(II).

in which $R_1$ and $R_2$ have the meanings given above,
$R_4$ is $C_1$–$C_{22}$ alkyl, $C_2$–$C_{21}$ oxa- or thiaalkyl, $C_3$–$C_{18}$ alkenyl, $C_3$–$C_{18}$ alkynyl, $C_2$–$C_6$ hydroxyalkyl, $C_3$–$C_{24}$ alkoxycarbonylalkyl, $C_5$–$C_{12}$ cycloalkyl, $C_6$–$C_{14}$ aryl,

$C_7$–$C_{15}$ alkaryl, $C_7$–$C_{15}$ aralkyl, a substituted or unsubstituted $C_5$–$C_{17}$ piperidin-4-yl group, a group of the formula IV

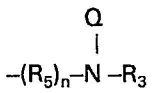

(IV) or

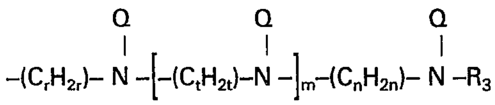

(V)

wherein
$R_3$ has the meaning given above,
n is 0 or 1,
$R_5$ is $C_2$–$C_{22}$ alkylene, $C_4$–$C_{22}$ alkenylene, $C_4$–$C_{22}$ alkynylene or $C_5$–$C_9$ cycloalkylene, each of which can be interrupted with one or two oxygen or sulfur atoms, or $R_5$ ist a group oft the formula VI

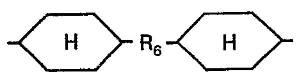

in which $R_6$ is –O–, –S– or –$(R_7)C(R_8)$–, wherein $R_7$ and $R_8$ independently of one another are hydrogen or $C_1$–$C_8$ alkyl, or $R_7$ and $R_8$ together with the C atom to which they are attached form $C_5$–$C_{12}$ cycloalkyl, or $R_7$ and $R_8$ together are 1,4-cyclohexylenedimethylene or 1,3,3-trimethylcyclohexylene-1,5, or $R_5$ is also phenylene, biphenylene or a group of the formula

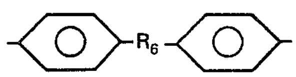

wherein $R_6$ has the meaning given above, and
r, t and n independently of one another are 2, 3, 4, 5 or 6,
m is 0, 1, 2 or 3,
Q is a group of the formula II, wherein $R_1$ and $R_2$ have the meanings given above, or
$R_3$ and $R_4$ together with the N atom to which they are attached are also substituted pyrrolidine, oxazolidine, piperidine or morpholine, or $R_3$ and $R_4$ together form the radical $-CH_2-CH_2-N(Q)-CH_2-CH_2-$ wherein Q has the meaning given above.

3. A compound according to Claim 1 of the formula I wherein
$R_1$ and $R_2$ are each $C_1$–$C_8$ alkyl,
A is a group $-N(R_3)R_4$ (III), wherein
$R_3$ is hydrogen, $C_1$–$C_{18}$ alkyl, $C_3$–$C_4$ alkenyl, $C_3$–$C_4$ alkynyl, $C_3$–$C_{24}$ alkoxycarbonylmethyl or -ethyl, $C_5$–$C_{12}$ cycloalkyl, phenyl, benzyl, $C_7$–$C_{15}$ alkaryl, a substituted or unsubstituted $C_5$–$C_{17}$ piperidin-4-yl group, or a group of the formula II, wherein $R_1$ and $R_2$ have the meanings given above,
$R_4$ is $C_1$–$C_{18}$ alkyl, $C_3$–$C_4$ alkenyl, $C_3$–$C_4$ alkynyl, $C_3$–$C_{24}$ alkoxycarbonylmethyl or -ethyl, $C_5$–$C_{12}$ cycloalkyl, phenyl, benzyl, $C_7$–$C_{15}$ alkaryl, a substituted or unsubstituted $C_5$–$C_{17}$ piperidin-4-yl group, a group of the formula IV or V, wherein $R_3$ has the meaning given above,
n is 0 or 1,
$R_5$ is $C_2$–$C_9$ alkylene which can be interrupted with one or two oxygen or sulfur atoms, or it is cyclohexylene, or a group of the formula VI, wherein $R_6$ is –O–, –S– or –$(R_7)C(R_8)$–, wherein
$R_7$ and $R_8$ independently of one another are hydrogen or methyl, or
$R_7$ and $R_8$ together with the C atom to which they are attached form cyclohexylene, or
$R_7$ and $R_8$ together are 1,4-cyclohexylenedimethylene or 1,3,3-trimethyl-cyclohexylene-1,5
r, t and n are 2 or 3,
m is 0 or 1,
Q is a group of the formula II, wherein $R_1$ and $R_2$ have the meanings given above, or
$R_3$ and $R_4$ together wiht the N atom to which they are attached form a pyrrolidine, oxozolidine, piperidine or morpholine ring, or
$R_3$ and $R_4$ together are the radical $-CH_2CH_2-N(Q)-CH_2CH_2-$ wherein Q has the meaning given above.

4. A compound to Claim 1 of the formula I wherein
$R_1$ is α-branched $C_3$–$C_8$ alkyl,
$R_2$ is $C_1$–$C_8$ alkyl,
A is a group $-N(R_3)R_4$ (III) wherein
$R_3$ is hydrogen, $C_1$–$C_{18}$ alkyl, allyl, propargyl, $C_3$–$C_{14}$ alkoxycarbonylmethyl, $C_3$–$C_{15}$ alkoxycarbonylethyl or $C_5$–$C_8$ cycloalkyl,
$R_4$ is $C_1$–$C_4$ alkyl, allyl, propargyl, $C_3$–$C_{14}$ alkoxycarbonylmethyl, $C_3$–$C_{15}$ alkoxycarbonylethyl, $C_5$–$C_8$ cycloalkyl, or a group of the formula IV or V, wherein $R_3$ has the meaning given above,
n is 1,
$R_5$ is $C_2$–$C_6$ alkylene,
r, t and n are 2 or 3,
m is 0,
Q is a group of the formula II, wherein $R_1$ and $R_2$ have the meanings given above, or
$R_3$ and $R_4$ together with the N atom to which they are attached form a piperidine or morpholine ring, or
$R_3$ and $R_4$ together are the radical $-CH_2CH_2-N(Q)-CH_2CH_2-$wherein Q has the meaning given above.

5. A compound according to Claim 1 of the formula I wherein
$R_1$ and $R_2$ are α-branched $C_3$–$C_8$ alkyl,
A is a group $-N(R_3)R_4$ (III), wherein
$R_3$ is hydrogen, $C_1$–$C_{12}$ alkyl or cyclohexyl,
$R_4$ is $C_1$–$C_4$ alkyl, cyclohexyl, or a group of the formula IV, wherein $R_3$ has the meaning given above, and Q is a group of the formula II, wherein $R_1$ and $R_2$ have the meanings given above,
n is 1,
$R_5$ is $C_2$–$C_6$ alkylene, or
$R_3$ and $R_4$ together with the N atom to which they are attached form a piperidine or morpholine ring, or
$R_3$ and $R_4$ together are the radical $-CH_2CH_2-N(Q)-CH_2CH_2-$ wherein Q has the meaning given above.

6. A compound according to Claim 1 of the formula I wherein $R_1$ and $R_2$ are tert-butyl or 1,1,3,3-tetramethyl-butyl, and A has the meaning given above.

7. Use of a compound according to Claim 1 of the formula I for stabilising organic material.

8. Use according to Claim 7, characterised in

that the organic material to be stabilised is polyolefin.

9. A process for producing a compound of the formula I according to Claim 1, characterised in that a phosphonite of the formula VII

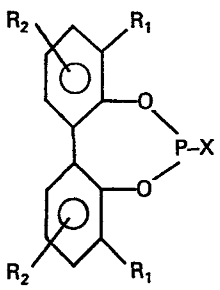

VII,

wherein X is a reactive group, and $R_1$ and $R_2$ have the meanings given in Claim 1, is reacted with an amine ZA, wherein Z is hydrogen or an Na, Li or K atom, and A has the meaning defined in Claim 1; or a phosphoric acid amide of the formula IX

$$(Hal)_2-P-A \quad (IX),$$

wherein «Hal» is a halogen atom, and A has the meaning defined above, is reacted with a biphenol of the formula X

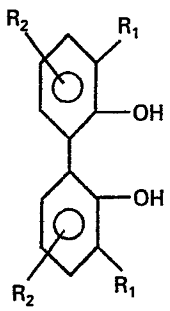

(X),

wherein $R_1$ and $R_2$ have the meanings defined above.

10. A compound according to Claim 1 of the formula I wherein A is $-N(R_3)R_4$, in which $R_3$ is a piperidin-4-yl group of the formula XI

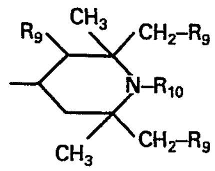

(XI)

wherein $R_9$ is hydrogen or methyl, and $R_{10}$ is hydrogen, oxyl, $C_1$–$C_8$ alkyl, $C_3$–$C_8$ alkenyl, $C_3$–$C_6$ alkynyl, $C_7$–$C_{12}$ aralkyl, $C_2$–$C_{21}$ alkoxyalkyl, an aliphatic acyl group having 1–4 atoms, or a group $-CH_2COOR_{11}$, in which $R_{11}$ is $C_1$–$C_{12}$ alkyl, $C_3$–$C_8$ alkenyl, phenyl, $C_7$–$C_8$ aralkyl or cyclohexyl, and $R_4$ has the meaning given in Claim 2, and the remaining symbols have the meanings defined in Claim 1.

11. A compound according to Claim 1 of the formula I wherein A is $-N(R_3)R_4$, where $R_3$ and $R_4$ are each a group of the formula XI in which $R_9$ and $R_{10}$ have the meanings given in Claim 10, and the remaining symbols have the meanings defined in Claim 1.

12. A compound according to Claims 10 and 11, where in the radicals of the formula XI the symbol $R_9$ is hydrogen, and $R_{10}$ is hydrogen, $C_1$–$C_8$ alkyl, allyl, benzyl or acetyl.

13. A compound according to Claim 12, wherein $R_9$ is hydrogen, and $R_{10}$ is hydrogen, methyl or acetyl.

14. N-(2,4,8,10-tetra-tert-butyldibenz[d,f] [1,3,2]-dioxaphosphepin-6-yl)-piperidine or N-(2,4,8,10-tetra-tert-butyldibenz[d,f] [1,3,2]dioxaphosphepin-6-yl)-dibutylamine according to Claim 1.